# EUROPÄISCHE PATENTSCHRIFT

(11) **EP 2 840 941 B1**
(45) Veröffentlichungstag und Bekanntmachung des Hinweises auf die Patenterteilung: **24.10.2018**
(21) Anmeldenummer: 13704440.0
(22) Anmeldetag: 15.02.2013
(51) Int. Cl.: A47J 27/04

(54) **GARER UND MIXER**
STEAMER AND MIXER
CUISEUR À VAPEUR ET MIXEUR

(30) Priorität: 07.03.2012 DE 102012004336
(43) Veröffentlichungstag der Anmeldung: 04.03.2015
(73) Patentinhaber: Hildenbrand, Andrea, 73066 Uhingen (DE); Mergenthaler, Annemarie, 73066 Uhingen (DE); Mergenthaler, Petra, 73066 Uhingen (DE); Mergenthaler, Viola, 73066 Uhingen (DE)
(72) Erfinder: ROESSLER, Michael, 72066 Uhingen (DE)
(74) Vertreter: Witte, Weller & Partner Patentanwälte mbB
(86) Internationale Anmeldenummer: PCT/EP2013/053041
(87) Internationale Veröffentlichungsnummer: WO 2013/131731

(56) Entgegenhaltungen:
- EP-A1- 2 042 060
- EP-A1- 2 338 389
- WO-A2-2009/047771
- US-A- 5 794 524

## Beschreibung

Die vorliegende Erfindung betrifft eine Küchenmaschine mit einem Gehäuse, an dem eine Rührgefäßaufnahme zur Aufnahme eines Rührgefäßes ausgebildet ist, wobei eine Flüssigkeit in dem Rührgefäß mittels einer Heizeinrichtung erwärmbar ist, und mit einer auf das Rührgefäß aufsetzbaren Dampfgaranordnung, die einen Garaufsatz aufweist, auf dem durch Dampf zu garendes Gargut angeordnet werden kann.

Eine derartige Küchenmaschine ist bekannt aus dem Dokument EP 0 757 530 B1.

Die aus diesem Dokument bekannte Küchenmaschine weist ein Rührgefäß auf, in dem ein Rührwerk angeordnet ist. Wenn das Rührgefäß in die Rührgefäßaufnahme eingesetzt ist, kann das Rührwerk mittels eines Antriebsmotors der Küchenmaschine in Rotation versetzt werden. Die Küchenmaschine weist ferner einen Deckel für das Rührgefäß auf, wobei der Deckel eine Zentraldurchbrechung aufweist. Auf den Deckel des Rührgefäßes ist eine Dampfgaranordnung aufsetzbar, die einen Garaufsatz beinhaltet. Der Garaufsatz ist direkt auf den Deckel des Rührgefäßes aufsetzbar. Wenn Flüssigkeit in dem Rührgefäß erwärmt wird, steigt Dampf durch die Zentraldurchbrechung des Deckels auf und tritt durch Dampfdurchlässe in dem Garaufsatz hindurch. Gargut, das auf dem Garaufsatz angeordnet ist, kann auf diese Weise mittels des Dampfes gegart werden. Auf den Garaufsatz ist ein Aufsatzdeckel aufsetzbar, derart, dass ein Garraum oberhalb des Garaufsatzes entsteht. Der Aufsatzdeckel kann Durchbrechungen aufweisen, um zu verhindern, dass der Aufsatzdeckel durch Dampfdruck abgehoben wird.

Während des Dampfgarvorganges entstehendes Kondensat wird über die Zentraldurchbrechung des Deckels des Rührgefäßes zurück in das Rührgefäß geleitet. Hierdurch soll es möglich sein, Kondensat, das in Kontakt mit dem Gargut war, zum Anreichern der Flüssigkeit in dem Rührgefäß zu verwenden.

Sofern die in dem Rührgefäß enthaltene Flüssigkeit nach dem Dampfgarvorgang verwendet werden soll, bspw. für weitere Kochvorgänge, muss zunächst die Dampfgaranordnung von dem Deckel des Rührgefäßes entfernt werden. Anschließend muss der Deckel abgenommen werden und das Rührgefäß muss aus der Rührgefäßaufnahme entnommen werden.

Vor diesem Hintergrund ist es eine Aufgabe der Erfindung, eine verbesserte Küchenmaschine sowie ein verbessertes Dampfgarverfahren mittels einer Küchenmaschine anzugeben, wobei insbesondere die Handhabung vereinfacht ist.

Diese Aufgabe wird von einer Küchenmaschine gemäß Anspruch 1 gelöst.

Ferner wird die obige Aufgabe gelöst durch ein Verfahren mit den Schritten des Verfahrens nach Anspruch 8.

Bei der erfindungsgemäßen Küchenmaschine ist folglich im Gegensatz zum Stand der Technik vorgesehen, dass Kondensat, das bei dem Dampfgarvorgang entsteht, in den Aufsatzbehälter der Dampfgaranordnung geleitet wird, nicht oder im Wesentlichen nicht in das Rührgefäß gelangt.

Hierdurch kann hochkonzentriertes Kondensat in dem Auffangbehälter aufgefangen werden. Ferner kann das aufgefangene Kondensat einfach für weitere Kochvorgänge verwendet werden, indem nur der Auffangbehälter von dem Rührgefäß abgenommen wird. Mit anderen Worten ist es zur Weiterverwendung von bei dem Dampfvorgang entstehender Flüssigkeit nicht notwendig, den Deckel des Rührgefäßes oder das Rührgefäß selber aus der Küchenmaschine zu entfernen.

Die Aufgabe wird somit vollkommen gelöst.

Bei der erfindungsgemäßen Küchenmaschine ist es von besonderem Vorteil, wenn der Auffangbehälter einen hochstehenden Außenrand und einen hochstehenden Innenrand aufweist, die einen ringförmigen Kondensatauffangraum bilden.

Diese Ausführungsform ist insbesondere dann vorteilhaft, wenn der Garaufsatz eine entsprechende ringförmige Gargutauflage aufweist, innerhalb der Dampfdurchlässe in dem Garaufsatz angeordnet sind.

Gemäß einer weiteren bevorzugten Ausführungsform weist der Auffangbehälter innerhalb des Innenrandes eine Zentralausnehmung auf, durch die Dampf hindurchtreten kann.

Bei dieser Ausführungsform kann der Dampf durch die Zentralausnehmung hindurchgelangen und von dort an die Unterseite des Garaufsatzes.

Durch geeignete Dimensionierung der Zentralausnehmung kann eine große Menge Dampf aus dem Rührgefäß durch den Auffangbehälter hindurch auf die Unterseite des Garaufsatzes geführt werden.

Ferner beinhaltet die Küchenmaschine einen Deckel für das Rührgefäß, wobei der Deckel eine Zentraldurchbrechung aufweist.

Hierbei kann Dampf aus dem Rührgefäß durch die Zentraldurchbrechung hindurch austreten und von dort in die Zentralausnehmung des Auffangbehälters eintreten.

Dabei ist es von besonderem Vorteil, wenn der Durchmesser der Zentralausnehmung dem Durchmesser der Zentraldurchbrechung des Deckels entspricht.

Hierdurch kann der Dampf im Wesentlichen ungehindert durch den Auffangbehälter hindurchgeführt werden, bis er an die Unterseite des Garaufsatzes auftrifft.

Gemäß einer erfindungsgemäßen Ausführungsform weist der Garaufsatz einen geschlossenen Zentralabschnitt auf, der die Zentraldurchbrechung des Deckels des Rührgefäßes abschirmt.

in einer Ausführungsform ist es besonders bevorzugt, wenn ein Garbereich für das Gargut ringförmig um den Zentralabschnitt herum ausgebildet ist Von unten über bspw. die Zentralausnehmung des Auffangbehälters hochsteigender Dampf wird bei dieser Ausführungsform mittels des Zentralabschnittes seitlich abgelenkt, dann an die Un-Unterseite des Garbereiches des Garaufsatzes geleitet. Der Garbereich ist dabei vorzugsweise ringförmig um den Zentralabschnitt herum ausgebildet. Hierdurch kann erreicht werden, dass das auf dem Garaufsatz angeordnete Gargut gleichmäßig von Dampf durchströmt wird.

Von besonderem Vorzug ist es dabei, wenn der Zentralabschnitt so ausgebildet ist, dass oberhalb des Garaufsatzes entstehendes Kondensat in den Auffangbehälter geleitet wird.

Der Zentralabschnitt, der die Zentraldurchbrechung des Deckels des Rührgefäßes abschirmt, sorgt folglich dafür, dass das oberhalb des Garaufsatzes entstehende Kondensat sicher in den Auffangbehälter geführt wird und nicht in das Rührgefäß zurückgelangt.

Von besonderem Vorteil ist es ferner, wenn der Zentralabschnitt an seiner Oberseite eine domförmige Erhebung aufweist.

Hierdurch kann gewährleistet werden, dass oberhalb des Garaufsatzes entstehendes Kondensat sich nicht oberhalb des Zentralabschnittes sammelt. Vielmehr fließt das Kondensat über die domförmige Erhebung radial nach außen durch die Dampfdurchlässe hindurch zurück, und zwar in den Auffangbehälter.

Gemäß einer weiteren bevorzugten Ausführungsform weist die Dampfgaranordnung einen Aufsatzdeckel, der auf dem Garaufsatz aufsetzbar ist.

Bei dieser Ausführungsform wird durch den Aufsatzdeckel ein zumindest weitgehend geschlossener Garraum oberhalb des Garaufsatzes gebildet, so dass durch Dampfdurchlässe des Garaufsatzes hindurchströmender Dampf in dem Garraum unterhalb des Aufsatzdeckels verbleibt und das Gargut folglich von allen Seiten mit Dampf umströmt wird.

Der Aufsatzdeckel kann dabei eine oder mehrere Öffnungen aufweisen, um zu vermeiden, dass ein zu hoher Dampfdruck in dem Garraum entsteht.

Erfindungsgemäß ist in dem Rührgefäß ein Rührwerk drehbar gelagert, das mittels eines Antriebsmotors antreibbar ist.

Der Antriebsmotor ist vorzugsweise in einem Gehäuse der Küchenmaschine aufgenommen. Durch das Rührwerk kann erreicht werden, dass Flüssigkeit in dem Rührgefäß nicht anbrennt und Dampf schneller aus der Flüssigkeit austritt, wenn diese erwärmt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigt:

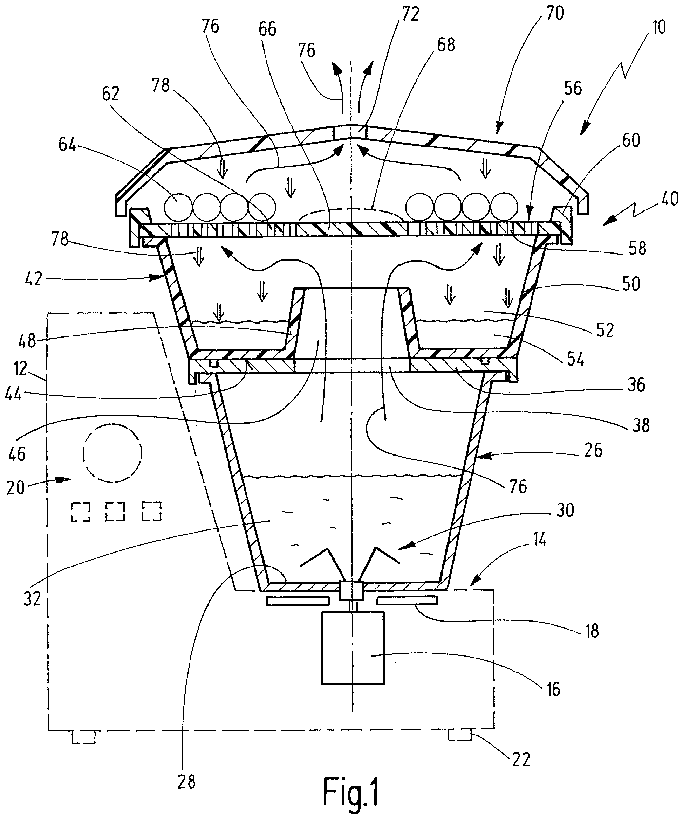

- Fig. 1: eine schematische Schnittansicht einer Ausführungsform einer erfindungsgemäßen Küchenmaschine.

In Fig. 1 ist schematisch eine Küchenmaschine dargestellt und generell mit 10 bezeichnet.

Die Küchenmaschine 10 weist ein Gehäuse 12 auf, an dem eine Rührgefäßaufnahme 14 ausgebildet ist. Unterhalb der Rührgefäßaufnahme 14 ist ein Antriebsmotor 16 zum Antreiben eines Rührwerkes eines Rührgefäßes vorgesehen. Ferner ist unterhalb der Rührgefäßaufnahme 14 eine Heizeinrichtung 18 zum Erwärmen des Rührgefäßes und/oder einer Flüssigkeit oder eines sonstigen Fluides innerhalb des Rührgefäßes angeordnet. Die Küchenmaschine 10 weist ferner Bedienelemente 20 auf, um bspw. den Antriebsmotor 16 in Rotation zu versetzen und/oder um die Heizeinrichtung
18 zu aktivieren. An der Unterseite des Gehäuses 12 sind Füße 22 vorgesehen, um die Küchenmaschine 10 auf einer Arbeitsfläche abzustellen.

Auf die Rührgefäßaufnahme 14 ist ein Rührgefäß 26 aufsetzbar, das einen Boden 28 aufweist. Im Bereich des Bodens ist ein Rührwerk 30 in dem Rührgefäß 26 drehbar gelagert. Das Rührgefäß 26 ist abgedichtet und ausgelegt zur Aufnahme einer Flüssigkeit 32.

Wenn das Rührgefäß 26 in die Rührgefäßaufnahme 14 eingesetzt ist, ist das Rührwerk 30 mit dem Antriebsmotor 16 gekoppelt und das Rührgefäß 26 ist mittels der Heizeinrichtung 18 im Bereich des Bodens 28 erwärmbar.

Auf dem Rührgefäß 26 ist ein Deckel 36 angeordnet, der bspw. fest mit dem Rührgefäß 26 verschraubt sein kann, bspw. durch einen Bajonettverschluss oder dergleichen. Der Deckel 36 weist eine Zentraldurchbrechung 38 auf.

Auf dem Rührgefäß 26 bzw. auf dem Deckel 36 ist eine Dampfgaranordnung 40 angeordnet. Die Dampfgaranordnung 40 beinhaltet einen Auffangbehälter 42, der auf das Rührgefäß 26 bzw. auf den Deckel 36 aufsetzbar ist. Der Auffangbehälter 42 weist einen ringförmigen geschlossenen Behälterboden 44 und eine Zentralausnehmung 46 auf. Der Durchmesser der Zentralausnehmung 46 entspricht dem Durchmesser der Zentraldurchbrechung 38, und ist vorzugsweise im Wesentlichen gleich groß wie der Durchmesser der Zentraldurchbrechung 38.

Der Auffangbehälter 42 weist einen hochstehenden Innenrand 48 auf, der um die Zentralausnehmung 46 herum ausgebildet ist. Ferner beinhaltet der Auffangbehälter 42 einen hochstehenden Außenrand 50, wobei der Behälterboden 44 zwischen dem Innenrand 48 und dem Außenrand 50 ausgebildet ist. Zwischen dem hochstehenden Innenrand 48 und dem hochstehenden Außenrand 50 ist folglich ein ringförmiger Kondensatauffangraum 52 gebildet, in dem ein Kondensat 54 aufgefangen werden kann.

Auf dem Auffangbehälter 42 ist ein Garaufsatz 56 angeordnet. Der Garaufsatz 56 weist einen Boden 58 und einen am Außenumfang etwas hochstehenden Rand 60 auf. In dem Boden 58 sind in einem ringförmigen Garabschnitt eine Mehrzahl von Dampfdurchlässen 62 ausgebildet. Der ringförmige Garbereich kann dabei mittels der Dampfdurchlässe 62 perforiert sein. Auf dem Garbereich ist ein Gargut 64 schematisch dargestellt. Der Garaufsatz 56 weist ferner einen geschlossenen Zentralabschnitt 66 auf, dessen Durchmesser vorzugsweise größer ist als der Durchmesser der Zentraldurchbrechung 38 des Deckels 36 und/oder größer als der wirksame Durchmesser der Zentralausnehmung 46 des Auffangbehälters 42. In der Projektion von oben schirmt der Zentralabschnitt 66 folglich die Zentraldurchbrechung 38 bzw. die Zentralausnehmung 46 ab.

Eine Oberseite des Zentralabschnittes 66 kann eine domartige Erhebung 68 aufweisen.

Auf dem Garaufsatz 56 ist ein Aufsatzdeckel 70 angeordnet. Zwischen der Oberseite des Garaufsatzes 56 und der Unterseite des Aufsatzdeckels 70 wird folglich ein im Wesentlichen geschlossener Garraum gebildet. Um zu vermeiden, dass der Aufsatzdeckel 70 während eines Garvorganges von dem Garaufsatz 56 abhebt, kann der Aufsatzdeckel 70 einen oder mehrere Dampfauslässe 72 aufweisen.

Zum Durchführen eines Dampfgarvorganges wird zunächst Flüssigkeit 32 in das Rührgefäß 26 eingefüllt. Die Menge der Flüssigkeit ist vorzugsweise kleiner als das Volumen des ringförmigen Kondensatauffangraumes 52. Wenn man davon ausgeht, dass ein gewisser Teil des Kondensates über einen Dampfauslass 72 in dem Aufsatzdeckel 70 entweicht, kann die in das Rührgefäß 26 einzufüllende Flüssigkeitsmenge auch größer sein als das Auffangvolumen des Kondensatauffangraumes 52, insbesondere kann das Flüssigkeitsvolumen 1,2-fach, vorzugsweise 1,4-fach so groß sein wie das Volumen des Kondensatauffangraumes 52.

Anschließend wird der Deckel 36 auf das Rührgefäß 26 aufgesetzt. Schließlich wird die Dampfgaranordnung 40 auf den Deckel 36 des Rührgefäßes 26 aufgesetzt.

Im nächsten Schritt wird die Heizeinrichtung 18 aktiviert, wobei optional das Rührwerk 30 mittels des Antriebsmotors 16 angetrieben werden kann. Durch die Erwärmung der Flüssigkeit 32 entsteht Dampf, der nach oben aufsteigt, und zwar zunächst durch die Zentraldurchbrechung 38 hindurch und anschließend durch die Zentralausnehmung 46 des Auffangbehälters 42 hindurch. Innerhalb des Auffangbehälters 42 trifft der Dampf auf die Unterseite des Zentralabschnittes 66 und wird seitlich abgelenkt, bis er von unten an den Garabschnitt gelangt. Dort tritt der Dampf durch die Dampfdurchlässe 62 hindurch, und zwar in den Garraum oberhalb des Garaufsatzes 56. Der Dampf, der in Fig. 1 mit 76 bezeichnet ist, sammelt sich dann in dem Garraum unterhalb des Aufsatzdeckels 70, wobei ein Teil des Dampfes über den Dampfauslass 72 austritt.

Kondensat, das an der Unterseite des Garabschnittes des Garaufsatzes 56 entsteht, sowie Kondensat, das oberhalb des Garaufsatzes 56 entsteht, sei es an der Unterseite des Aufsatzdeckels 70 oder im Bereich des Gargutes, tritt durch die Dampfdurchlässe 62 zurück in den Auffangbehälter. Durch den Zentralabschnitt 66 wird dabei gewährleistet, dass derartiges Kondensat nicht zurück in das Rührgefäß 26 gelangt.

In dem Auffangbehälter 42 wird folglich hochkonzentriertes Kondensat gesammelt, das überwiegend mit dem Gargut 64 in Kontakt getreten ist und folglich Aromastoffe etc. des Gargutes enthält.

Sofern an der Unterseite des Zentralabschnittes 66 Kondensat entsteht, handelt es sich hierbei um Kondensat, das nicht mit dem Gargut in Kontakt getreten ist. Derartiges Kondensat kann ggf. zurück in das Rührgefäß 26 tropfen, und zwar zurück durch die Zentralausnehmung 46 und die Zentraldurchbrechung 38.

Nach Beendigung des Dampfgarvorganges kann der Aufsatzdeckel 70 abgenommen werden, um das Gargut von dem Garaufsatz 56 zu entnehmen. Anschließend kann der Garaufsatz 56 abgenommen werden. Schließlich kann der Auffangbehälter 42 abgenommen werden, um das darin aufgefangene Kondensat 54 zu entfernen oder für weitere Kochvorgänge (bspw. Zubereitung von Soßen etc.) zu verwenden.

Die in dem Rührgefäß verbliebene Flüssigkeit 32 (ggf. ist auch keine Flüssigkeit mehr vorhanden) kann ggf. entsorgt werden.

Die Elemente der Dampfgaranordnung 40 sind vorzugsweise aus einem Kunststoff hergestellt, vorzugsweise in einem Spritzgussverfahren.

Um zu vermeiden, dass versehentlich der Garaufsatz 56 direkt auf dem Deckel 36 aufgesetzt wird, ist dieser so geformt, dass Kondensat an der Außenseite des Rührgefäßes vorbeitropfen würde, wenn er direkt auf den Deckel 36 aufgesetzt würde.

## Patentansprüche

1. Küchenmaschine (10) mit einem Gehäuse (12), an dem eine Gefäßaufnahme (14) zur Aufnahme eines Gefäßes (26) ausgebildet ist, wobei eine Flüssigkeit (32) in dem Gefäß (26) mittels einer Heizeinrichtung (18) erwärmbar ist, und mit einer auf das Gefäß (26) aufsetzbaren Dampfgaranordnung (40), die einen Garaufsatz (56) aufweist, auf dem durch Dampf zu garendes Gargut (64) angeordnet werden kann, wobei das Gefäß (26) als Rührgefäß ausgebildet ist und in dem Rührgefäß (26) ein Rührwerk (30) drehbar gelagert ist, das mittels eines Antriebsmotors antreibbar ist,
**dadurch gekennzeichnet, dass**
die Dampfgaranordnung (40) einen Auffangbehälter (42) aufweist, der auf das Rührgefäß (26) aufsetzbar ist und auf den der Garaufsatz (56) aufsetzbar ist, derart, dass bei einem Dampfgarvorgang entstehendes Kondensat (78) in dem Auffangbehälter (42) aufgefangen wird, wobei die Küchenmaschine einen Deckel (36) für das Rührgerät (26) aufweist, der eine Zentraldurchbrechung (38) aufweist, wobei der Garaufsatz (56) einen geschlossenen Zentralabschnitt (66) aufweist, der die Zentraldurchbrechung (38) des Deckels (36) des Rührgefäßes (26) abschirmt.

2. Küchenmaschine nach Anspruch 1, **dadurch gekennzeichnet, dass** der Auffangbehälter (42) einen hochstehenden Außenrand (50) und einen hochstehenden Innenrand (48) aufweist, die einen ringförmigen Kondensatauffangraum (52) bilden.

3. Küchenmaschine nach Anspruch 2, **dadurch gekennzeichnet, dass** der Auffangbehälter (42) innerhalb des Innenrandes (48) eine Zentralausnehmung (46) aufweist, durch die Dampf hindurchtreten kann.

4. Küchenmaschine nach Anspruch 1 oder 3, **dadurch gekennzeichnet, dass** der Durchmesser der Zentralausnehmung (46) dem Durchmesser der Zentraldurchbrechung (38) des Deckels (36) entspricht.

5. Küchenmaschine nach Anspruch 1, **dadurch gekennzeichnet, dass** der Zentralabschnitt (66) so ausgebildet ist, dass oberhalb des Garaufsatzes (56) entstehendes Kondensat (78) in den Auffangbehälter (42) geleitet wird.

6. Küchenmaschine nach Anspruch 1 oder 5, **dadurch gekennzeichnet, dass** der Zentralabschnitt (66) an seiner Oberseite eine domförmige Erhebung (68) aufweist.

7. Küchenmaschine nach einem der Ansprüche 1 - 6, **dadurch gekennzeichnet, dass** die Dampfgaranordnung (40) einen Aufsatzdeckel (70) aufweist, der auf den Garaufsatz (56) aufsetzbar ist.

8. Verfahren zum Dampfgaren mittels einer Küchenmaschine nach einem der Ansprüche 1 - 7, mit den Schritten:
- Einfüllen einer Flüssigkeit (32) in ein Rührgefäß (26) der Küchenmaschine;
- Erwärmen der Flüssigkeit (32) in dem Rührgefäß (26), derart, dass Dampf (76) aus dem Rührgefäß (26) aufsteigt;
- Antreiben des Rührwerks (30) mittels des Antriebsmotors (16);
- Leiten des Dampfes (76) durch eine Ausnehmung (46) eines Auffangbehäiters (42), der auf das Rührgefäß (26) aufgesetzt ist;
- Leiten des Dampfes (76) durch Dampfdurchlässe (62) eines Garaufsatzes (56), auf dessen Oberseite ein mittels Dampf zu garendes Gargut (64) angeordnet ist;
- Auffangen von Kondensat (78), das oberhalb des Garaufsatzes (56) entsteht, in dem Auffangbehälter (42);
wobei die Küchenmaschine einen Deckel (36) für das Rührgerät (26) aufweist, der eine Zentraldurchbrechung (38) aufweist, wobei der Garaufsatz (56) einen geschlossenen Zentralabschnitt (66) aufweist, der die Zentraldurchbrechung (38) des Deckels (36) des Rührgefäßes (26) abschirmt.

## Claims

1. Food processor (10) having a housing (12) on which a vessel receptacle (14) for receiving a vessel (26) is formed, wherein a fluid (32) in the vessel (26) can be heated by means of a heating device (18), and having a steam cooking arrangement (40) which can be placed on the vessel (26) and which has a cooking top part (56) on which food (64) to be cooked by steam can be arranged, wherein the vessel (26) is formed as a stirring vessel and wherein a stirring mechanism (30) is rotatably mounted in the stirring vessel (26) and can be driven by means of a drive motor,
**characterized in that**
the steam cooking arrangement (40) has a collecting container (42) which can be placed on the stirring vessel (26) and on which the cooking top part (56) can be placed, in such a way that condensate (78) produced during a steam cooking operation is collected in the collecting container (42), wherein the food processor comprises a lid (36) for the stirring vessel (26), wherein the lid (36) has a central aperture (38), wherein the cooking top part (56) comprises a closed central portion (66) which shields the central aperture (38) of the lid of the stirring vessel (26).

2. Food processor according to claim 1, **characterized in that** the collecting container (42) has an upstanding outer edge (50) and an upstanding inner edge (48) which form an annular condensate collecting chamber (52).

3. Food processor according to claim 2, **characterized in that** the collecting container (42) has a central recess (46) inside the inner edge (48) through which steam can pass.

4. Food processor according to claim 1 or 3, **characterized in that** the diameter of the central recess (46) corresponds to the diameter of the central aperture (38) of the lid (36).

5. Food processor according to claim 1, **characterized in that** the central portion (66) is designed in such a way that condensate (78) arising above the cooking top part (56) is conducted into the collecting container (42).

6. Food processor according to claim 1 or 5, **characterized in that** the central portion (66) has a dome-shaped elevation (68) on its upper side.

7. Food processor according to one of claims 1 to 6, **characterized in that** the steam cooking arrangement (40) comprises a top cover (70) which can be placed on the cooking top part (56).

8. Method for steam cooking by means of a food processor according to any one of claims 1 to 7, comprising the steps:
- filling a liquid (32) into a stirring vessel (26) of the food processor;
- heating the liquid (32) in the stirring vessel (26), such that steam (76) rises from the stirring vessel (26);
- driving the stirring mechanism (30) by means of the drive motor (16);
- passing the steam (76) through a recess (46) of a collecting container (42) which is placed on the stirring vessel (26);
- directing the steam (76) through steam passages (62) of a cooking top part (56), on the upper side of which is arranged food (64) to be cooked by means of steam;
- collecting condensate (78), which is produced above the cooking top part (56), in the collecting container (42);
the food processor having a lid (36) for the stirring device (26), which lid comprises a central aperture (38), wherein the cooking top part (56) has a closed central portion (66) which shields the central aperture (38) of the lid (36) of the stirring vessel (26).

## Revendications

1. Appareil ménager (10) avec un boîtier (12), sur lequel un logement de récipient (14) est formé en vue de recevoir un récipient (26), dans lequel un liquide (32) peut être chauffé dans le récipient (26) au moyen d'un dispositif de chauffage (18), et avec un dispositif de cuisson à la vapeur (40) pouvant être posé sur le récipient (26), qui présente un support de cuisson (56) sur lequel un produit à cuire à la vapeur (64) peut être déposé, dans lequel le récipient (26) est réalisé comme récipient d'agitation et un agitateur (30) est monté de façon rotative dans le récipient d'agitation (26) et peut être entraîné au moyen d'un moteur d'entraînement,
**caractérisé en ce que** le dispositif de cuisson à la vapeur (40) présente un récipient de collecte (42), qui peut être posé sur le récipient d'agitation (26) et sur lequel le support de cuisson (56) peut être posé, de telle manière que le condensat (78) formé lors d'une opération de cuisson à la vapeur soit recueilli dans le récipient de collecte (42), dans lequel l'appareil ménager présente pour le récipient d'agitation (26) un couvercle (36), qui présente un passage central (38), dans lequel le support de cuisson (56) présente une partie centrale fermée (66), qui protège le passage central (38) du couvercle (36) du récipient d'agitation (26).

2. Appareil ménager selon la revendication 1, **caractérisé en ce que** le récipient de collecte (42) présente un bord extérieur relevé (50) et un bord intérieur relevé (48), qui forment une chambre de collecte de condensat annulaire (52).

3. Appareil ménager selon la revendication 2, **caractérisé en ce que** le récipient de collecte (42) présente à l'intérieur du bord intérieur (48) un évidement central (46), à travers lequel la vapeur peut circuler.

4. Appareil ménager selon la revendication 1 ou 3, **caractérisé en ce que** le diamètre de l'évidement central (46) correspond au diamètre du passage central (38) du couvercle (36).

5. Appareil ménager selon la revendication 1, **caractérisé en ce que** la partie centrale (66) est réalisée de telle manière que le condensat (78) formé au-dessus du support de cuisson (56) soit conduit dans le récipient de collecte (42).

6. Appareil ménager selon la revendication 1 ou 5, **caractérisé en ce que** la partie centrale (66) présente sur son côté supérieur un renflement en forme de dôme (68).

7. Appareil ménager selon l'une quelconque des revendications 1 à 6, **caractérisé en ce que** le dispositif de cuisson à la vapeur (40) présente un couvercle à poser (70), qui peut être posé sur le support de cuisson (56).

8. Procédé de cuisson à la vapeur au moyen d'un appareil ménager selon l'une quelconque des revendications 1 à 7, comprenant les étapes suivantes:
- verser un liquide (32) dans un récipient d'agitation (26) de l'appareil ménager;
- chauffer le liquide (32) dans le récipient d'agitation (26), de telle manière que de la vapeur (76) s'échappe du récipient d'agitation (26);
- entraîner l'agitateur (30) au moyen du moteur d'entraînement (16);
- conduire la vapeur (76) à travers un évidement (46) d'un récipient de collecte (42), qui est posé sur le récipient d'agitation (26) ;
- conduire la vapeur (76) à travers des passages de vapeur (62) d'un support de cuisson (56), sur le côté supérieur duquel est déposé un produit (64) à cuire à la vapeur;
- recueillir le condensat (78), qui se forme au-dessus du support de cuisson (56), dans le récipient de collecte (42);
dans lequel l'appareil ménager présente pour l'appareil d'agitation (26) un couvercle (36), qui présente un passage central (38), dans lequel le support de cuisson (56) présente une partie centrale fermée (66), qui protège le passage central (38) du couvercle (36) du récipient d'agitation (26).
